(19) **Europäisches Patentamt European Patent Office Office européen des brevets**

(11) **EP 2 625 799 B1**

(12) **FASCICULE DE BREVET EUROPEEN**

(45) Date de publication et mention de la délivrance du brevet:
**23.08.2017 Bulletin 2017/34**

(51) Int Cl.:
**H04B 10/073** (2013.01)   **H04J 3/06** (2006.01)
**H04B 10/07** (2013.01)

(21) Numéro de dépôt: **11779776.1**

(22) Date de dépôt: **03.10.2011**

(86) Numéro de dépôt international:
**PCT/FR2011/052294**

(87) Numéro de publication internationale:
**WO 2012/045962 (12.04.2012 Gazette 2012/15)**

(54) **TECHNIQUE DE DÉTERMINATION D'UN TEMPS DE PROPAGATION D'UN SIGNAL OPTIQUE ENTRE DEUX ÉQUIPEMENTS OPTIQUES AU MOYEN D'UNE LIAISON OPTIQUE**

TECHNIK ZUR BESTIMMUNG EINER ÜBERTRAGUNGSVERZÖGERUNG EINES OPTISCHEN SIGNALS ZWISCHEN ZWEI OPTISCHEN VORRICHTUNGEN ÜBER EINE OPTISCHE VERBINDUNG

TECHNIQUE FOR DETERMINING A PROPAGATION DELAY OF AN OPTICAL SIGNAL BETWEEN TWO OPTICAL DEVICES VIA AN OPTICAL LINK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.10.2010 FR 1058057**

(43) Date de publication de la demande:
**14.08.2013 Bulletin 2013/33**

(73) Titulaire: **Orange**
**75015 Paris (FR)**

(72) Inventeurs:
• **JOBERT, Sébastien**
  **F-22140 Begard (FR)**
• **LE ROUZIC, Esther**
  **F-22560 Trébeurden (FR)**
• **BROCHIER, Nicolas**
  **F-22970 Ploumagoar (FR)**

(74) Mandataire: **Cochet, Bertrand**
**Orange**
**IMTW/OLPS/IPL/PAT**
**Orange Gardens**
**44 avenue de la République**
**CS 50010**
**92326 Châtillon Cedex (FR)**

(56) Documents cités:
**EP-A1- 1 610 476    US-A1- 2009 060 498**
**US-B1- 6 563 613**

EP 2 625 799 B1

**Description**

L'invention se situe dans le domaine des systèmes de transmission optique, et plus particulièrement dans le domaine de la détermination d'un temps de propagation d'un signal optique sur un lien optique entre deux équipements optiques.

Pour mesurer un temps de propagation d'un signal optique entre deux équipements optiques reliés par deux liaisons distinctes, une pour chaque sens de transmission, il est connu de mesurer un temps de propagation aller et retour. Un signal de mesure est envoyé par un équipement optique initiant la mesure vers l'équipement optique voisin par le premier lien optique. Ce dernier répond au signal de mesure vers l'équipement optique initiateur par le second lien optique. Un tel système est décrit, par exemple, par la demande de brevet US 2009/0060498.

Le protocole PTP, pour « Précision Time Protocol », tel que spécifié dans la norme IEEE 1588-2008 permet dans un réseau de communication de synchroniser des horloges entre des équipements. Plusieurs mécanismes sont possibles dans cette norme. L'un d'entre eux comporte un mécanisme de calcul de délai optique, appelé « Peer Delay Link Measurement ». Dans ce mécanisme, un équipement initiateur envoie à un équipement distant un message « Peer_Delay_Request » par une première liaison optique. Ce dernier répond à l'aide d'un message de réponse « Peer_Delay_Response » accompagné optionnellement d'un autre message de réponse « Peer_Delay_Response_Follow_Up », l'un de ces deux messages de réponse comprenant notamment une mesure d'un temps de traitement électronique interne à l'équipement distant. Ce temps de traitement interne est susceptible de varier par exemple en fonction du taux de charge de l'équipement distant. Ce ou ces messages de réponse sont acheminés par une deuxième liaison optique, distincte de la première liaison optique. Cette méthode permet donc d'obtenir précisément le temps de traitement interne dans l'équipement distant pour une mesure donnée.

On obtient alors un temps de propagation aller et retour en retirant du temps mesuré par l'équipement initiateur le temps de traitement interne tel qu'il a été reçu de l'équipement distant. Le temps de propagation dans un sens est alors estimé par division du temps de propagation aller et retour en deux parties égales. Toutefois, cette méthode ne prend pas en compte une asymétrie des liaisons optiques connectant les équipements initiateur et distant.

Ainsi, dans un réseau de transmission optique, lorsque les longueurs respectives des liaisons des deux sens ne sont pas identiques, la valeur du temps de propagation estimée est entachée d'une erreur difficilement quantifiable.

Dans certains cas, lorsqu'il existe une différence de longueur des liaisons, par exemple des fibres optiques, l'asymétrie peut être importante. Dans d'autres cas, bien que la différence de longueur des fibres en elle-même soit assez faible, notamment lorsqu'elles appartiennent à un même câble, l'asymétrie peut provenir de la répartition des fibres sur les équipements eux-mêmes ou bien encore de réparations ou d'épissures faites pendant la durée de vie du câble.

De nombreuses applications nécessitent une connaissance de ce temps de propagation d'un signal optique d'un équipement à un autre. A titre d'exemple, on peut citer des méthodes de réservation des ressources ou bien encore des méthodes de synchronisation d'équipements optiques.

Pour ces différentes applications, la précision requise pour la mesure d'un temps de propagation d'un signal optique est de l'ordre de quelques nanosecondes. Elle ne peut être obtenue à l'aide des techniques existantes, notamment en raison de l'erreur entachant la mesure, plus particulièrement dans le cas de liaisons asymétriques.

Un des buts de l'invention est de remédier à des insuffisances/inconvénients de l'état de la technique et/ou d'y apporter des améliorations.

Selon un premier aspect, l'invention a pour objet un procédé de mesure d'un temps de propagation d'un signal optique entre deux équipements dans un réseau de transmission optique, le signal optique étant transmis du premier équipement vers le deuxième équipement au moyen d'une première fibre optique et du deuxième équipement vers le premier équipement au moyen d'une deuxième fibre optique, distincte de la première fibre optique, le deuxième équipement comprenant des moyens dits de bouclage, aptes dans un premier mode à permettre un acheminement du signal optique entre les deux équipements, ledit procédé de mesure comprenant les étapes suivantes mises en oeuvre par le deuxième équipement :

- une étape de détection, au cours de laquelle un déclenchement d'une mesure du temps de propagation d'un signal de mesure est détecté, le signal de mesure étant émis par le premier équipement au moyen de la première fibre optique ;
- une étape de configuration des moyens de bouclage vers un deuxième mode, ledit deuxième mode permettant d'injecter dans la première fibre optique un signal en retour au signal de mesure émis par le premier équipement.

Dans le premier mode, les moyens de bouclage dirigent un signal optique reçu sur la première fibre optique vers des moyens de réception du deuxième équipement.

Le signal en retour peut correspondre au signal de mesure dans un mode de réalisation dans lequel le bouclage est optique. Dans un mode de réalisation dans lequel le bouclage comprend un traitement électronique, le signal en retour peut correspondre à un signal généré par le deuxième équipement.

Le signal de mesure peut être une impulsion lumineuse, ou bien encore un paquet donné ou bien encore une trame donnée.

Les moyens de bouclage permettent ainsi d'injecter le signal en retour dans la fibre optique par l'intermédiaire de laquelle le signal de mesure a été reçu.

Corrélativement, selon un deuxième aspect, l'invention a pour objet un procédé de détermination d'un temps de propagation d'un signal optique entre deux équipements dans un réseau de transmission optique, le signal optique étant transmis du premier équipement vers le deuxième équipement au moyen d'une première fibre optique et du deuxième équipement vers le premier équipement au moyen d'une deuxième fibre optique, distincte de la première fibre optique, le deuxième équipement mettant en oeuvre le procédé de mesure selon le premier aspect, ledit procédé de détermination comprenant les étapes suivantes mises en oeuvre par le premier équipement :

- une étape de déclenchement d'une mesure du temps de propagation d'un signal de mesure au moyen de la première fibre, le signal de mesure étant émis vers le deuxième équipement au moyen de la première fibre optique ;
- une étape de réception d'un signal en retour émis par le deuxième équipement sur la première fibre optique ;
- une étape de détermination dudit temps de propagation à partir d'un instant d'émission du signal de mesure et d'un instant de réception du signal en retour.

Le premier équipement, recevant le signal en retour sur la fibre optique par l'intermédiaire de laquelle il a émis le signal de mesure, peut déterminer le temps de propagation sans être perturbé par une asymétrie entre les deux fibres optiques.

Le temps de propagation déterminé est alors fiable et permet d'atteindre la précision recherchée, c'est-à-dire de l'ordre de quelques nanosecondes.

Il est ici souligné que des méthodes s'appuyant sur le principe de rétrodiffusion de la fibre optique, telles que l'OTDR, pour « Optical Time-Domain Reflectometer » ne permettent pas d'obtenir une mesure satisfaisante, notamment dans le cas de fibres optiques de longueur importante. En effet, dans un tel cas, la puissance de la lumière reçue par rétrodiffusion peut alors être trop faible et se perdre dans le bruit de la ligne avant la fin de la rétrodiffusion. Il n'est pas possible de déterminer la fin du phénomène de rétrodiffusion et par conséquent de déterminer le temps de propagation. Il convient de noter que ce type de mesure est utilisé généralement pour localiser des points de coupure de fibre ou bien pour mesurer la longueur de la fibre. Il est également difficilement applicable à un signal de mesure porté par une longueur d'onde donnée pour un signal multiplexé en longueurs d'onde, du fait de la puissance importante nécessaire pour ce type de mesure qui viendrait impacter les autres longueurs d'onde.

Le temps de propagation déterminé peut être utilisé lors de la mise en oeuvre de méthodes de réservation de ressources dans des réseaux de transmission optique à commutation de circuit ou bien encore à commutation de rafales OBS, pour « Optical Burst Switching ».

Les moyens de bouclage peuvent être formés uniquement de composants optiques. Dans ce mode de réalisation, le signal en retour est injecté dans la première fibre optique sans traitement particulier du deuxième équipement. Le temps de propagation ainsi obtenu est d'une très grande précision.

Selon une caractéristique particulière du procédé de mesure, l'étape de détection consiste en une étape de réception d'une requête de mesure du temps de propagation, ladite requête étant transmise par le premier équipement.

Le premier équipement transmet une requête de mesure au deuxième équipement. La réception de cette requête au deuxième équipement déclenche la phase de mesure. Dans un mode de réalisation particulier, l'étape de configuration est mise en oeuvre suite à la réception de la requête de mesure et avant la réception du signal de mesure.

Selon encore une autre caractéristique particulière, le procédé de mesure comprend une étape de détermination d'un temps de traitement au deuxième équipement, le temps de traitement étant transmis en retour au premier équipement.

Corrélativement, selon une caractéristique particulière, le procédé de détermination comprend en outre une étape de réception du temps de traitement au deuxième équipement, le deuxième équipement mettant en oeuvre le procédé de mesure tel que décrit précédemment, et dans lequel l'étape de détermination du temps de propagation prend également en compte ledit temps de traitement.

Dans ce mode de réalisation, un traitement électronique est effectué au niveau du deuxième équipement. Le deuxième équipement fournissant au premier équipement la durée du traitement électronique interne, ceci permet de corriger le temps de propagation aller et retour mesuré par le premier équipement et d'obtenir ainsi un temps de propagation ne prenant pas en compte le temps de traitement interne. Le temps de propagation ainsi déterminé n'est pas entaché d'erreurs liées à l'asymétrie.

Dans un mode de réalisation particulier, pendant ce traitement électronique, les moyens de bouclage sont configurés vers le deuxième mode de fonctionnement.

Dans un autre mode de réalisation particulier, les moyens de bouclage sont configurés vers le deuxième mode de fonctionnement avant la réception du signal de mesure. Dans ce cas, le déclenchement de la phase de mesure est détecté par la réception d'une requête de mesure en provenance du premier équipement.

Selon une autre caractéristique particulière du procédé de mesure, l'étape de détection consiste en une étape de réception du signal de mesure en provenance du premier équipement.

Le déclenchement de la phase de mesure est détecté par la réception du signal de mesure. Dans ce cas, l'étape de configuration est immédiatement mise en oeuvre suite à cette détection.

Selon un troisième aspect, l'invention concerne un procédé de détermination d'une asymétrie entre deux fibres optiques reliant deux équipements dans un réseau de transmission optique, un signal optique étant transmis du premier équipement vers le deuxième équipement au moyen d'une première fibre optique et du deuxième équipement vers le premier équipement au moyen d'une deuxième fibre optique, distincte de la première fibre optique, dans lequel : le premier, respectivement le deuxième, équipement met en oeuvre un procédé de détermination d'un premier, respectivement un deuxième, temps de propagation d'un signal optique au moyen de la première, respectivement la deuxième, fibre optique selon le deuxième aspect en coopérant avec le deuxième, respectivement le premier, équipement mettant en oeuvre le procédé de mesure selon le premier aspect ;
ledit procédé comprenant les étapes suivantes mises en oeuvre par le premier équipement :

- une étape de réception du deuxième temps de propagation déterminé par le deuxième équipement et,
- une étape de détermination de l'asymétrie à partir des premier et deuxième temps de propagation.

L'asymétrie déterminée peut être utilisée pour la mise en oeuvre d'une synchronisation entre des équipements distants. En effet, la connaissance de l'asymétrie entre deux fibres optiques reliant deux équipements permet de corriger le transfert d'une référence de synchronisation. Ceci permet d'améliorer la qualité de la synchronisation dans le réseau de transmission optique. Certaines évolutions des réseaux mobiles, telles que le LTE, pour « Long Term Evolution », nécessitent une telle qualité.

Selon un quatrième aspect, l'invention concerne un premier équipement d'un réseau de transmission optique, connecté à un deuxième équipement, un signal optique étant transmis dudit deuxième équipement vers ledit premier équipement au moyen d'une première fibre optique et dudit premier équipement vers ledit deuxième équipement au moyen d'une deuxième fibre optique, distincte de la première fibre optique, ledit premier équipement comprenant :

- des moyens de bouclage, agencés pour, dans un premier mode, diriger un signal optique reçu sur la première fibre optique vers des moyens de réception du premier équipement et, dans un deuxième mode, injecter dans la première fibre optique un signal émis en retour à un signal de mesure émis par ledit deuxième équipement ;
- des moyens de détection d'un déclenchement d'une mesure du temps de propagation d'un signal de mesure, le signal de mesure étant émis par ledit deuxième équipement au moyen de la première fibre ;
- des moyens de commande, agencés pour configurer les moyens de bouclage vers le deuxième mode suite à ladite détection.

Selon une caractéristique particulière, le premier équipement comprend en outre :

- des moyens de réception du signal de mesure ;
- des moyens de traitement, agencés pour traiter le signal de mesure pour obtenir le signal en retour et pour déterminer un temps de traitement par le premier équipement ;
- des moyens de transmission du temps de traitement.

Selon un cinquième aspect, l'invention concerne un système de mesure d'un temps de propagation d'un signal optique dans un réseau de transmission optique comprenant le premier équipement selon le quatrième aspect décrit ci-avant et un deuxième équipement du réseau de transmission optique, connecté au premier équipement et comprenant :

- des moyens de déclenchement d'une mesure du temps de propagation d'un signal de mesure, le signal de mesure étant émis par ledit deuxième équipement au moyen de la première fibre vers ledit premier équipement ;
- des moyens de réception d'un signal en retour émis par ledit premier équipement ;
- des moyens de détermination dudit temps de propagation à partir d'un instant d'émission du signal de mesure et d'un instant de réception du signal en retour.

Selon une caractéristique particulière, le deuxième équipement du système ci-avant comprend en outre des moyens de commutation du signal en retour reçu sur la première fibre vers les moyens de réception de signal optique sur la deuxième fibre, lesdits moyens de réception sur la deuxième fibre formant ainsi les moyens de réception du signal en retour.

Selon un sixième aspect, l'invention concerne un système de mesure d'un temps de propagation d'un signal optique dans un réseau de transmission optique comprenant le premier équipement selon la caractéristique particulière du quatrième aspect décrit ci-avant et un deuxième équipement du réseau de transmission optique, connecté au premier équipement et comprenant :

- des moyens de déclenchement d'une mesure du temps de propagation d'un signal de mesure, le signal de mesure étant émis par ledit deuxième équipement au moyen de la première fibre vers ledit premier équipement ;

- des moyens de réception d'un signal en retour émis par ledit premier équipement, ledit signal en retour comprenant un temps de traitement déterminé par ledit deuxième équipement ;
- des moyens de détermination dudit temps de propagation à partir d'un instant d'émission du signal de mesure, d'un instant de réception du signal en retour et du temps de traitement reçu ;
- des moyens de commutation entre une première position, dans laquelle un signal optique est transmis dudit deuxième équipement vers ledit premier équipement au moyen d'une première fibre optique et dudit premier équipement vers deuxième équipement au moyen d'une deuxième fibre optique, distincte de la première fibre optique, et une deuxième position, dans laquelle un signal optique est transmis dudit deuxième équipement vers ledit premier équipement au moyen de la deuxième fibre optique et dudit premier équipement vers ledit deuxième équipement au moyen de la première fibre optique ; et
- des moyens de commande agencés pour commander la commutation des moyens de commutation vers la deuxième position.

Selon un septième aspect, l'invention concerne également un programme d'ordinateur comportant des instructions pour la mise en oeuvre du procédé de mesure d'un temps de propagation selon le premier aspect, mises en oeuvre par un équipement d'un réseau de transmission optique, lorsque ce programme est exécuté par un processeur.

Selon un huitième aspect, l'invention concerne en outre un programme d'ordinateur comportant des instructions pour la mise en oeuvre du procédé de détermination d'un temps de propagation selon le deuxième aspects, mises en oeuvre par un équipement d'un réseau de transmission optique, lorsque ce programme est exécuté par un processeur.

L'invention sera mieux comprise à l'aide de la description suivante de modes de réalisation particuliers des procédés de l'invention, en référence aux dessins annexés sur lesquels :

- la figure 1a représente deux équipements optiques selon une première variante d'un premier mode particulier de réalisation de l'invention ;
- la figure 1b représente deux équipements optiques selon une deuxième variante du premier mode particulier de réalisation de l'invention ;
- la figure 2 représente deux équipements optiques selon une troisième variante du premier mode particulier de réalisation de l'invention ;
- la figure 3a représente deux équipements optiques selon une première variante d'un deuxième mode particulier de réalisation de l'invention ;
- la figure 3b représente deux équipements optiques selon une deuxième variante du deuxième mode particulier de réalisation de l'invention ;
- la figure 4 représente les étapes des procédés de mesure et de détermination selon le premier mode particulier de réalisation de l'invention ;
- la figure 5 représente les étapes des procédés de mesure et de détermination selon la première variante du deuxième mode particulier de réalisation de l'invention ;
- la figure 6 représente les étapes du procédé de détermination d'une asymétrie selon un mode particulier de réalisation de l'invention.

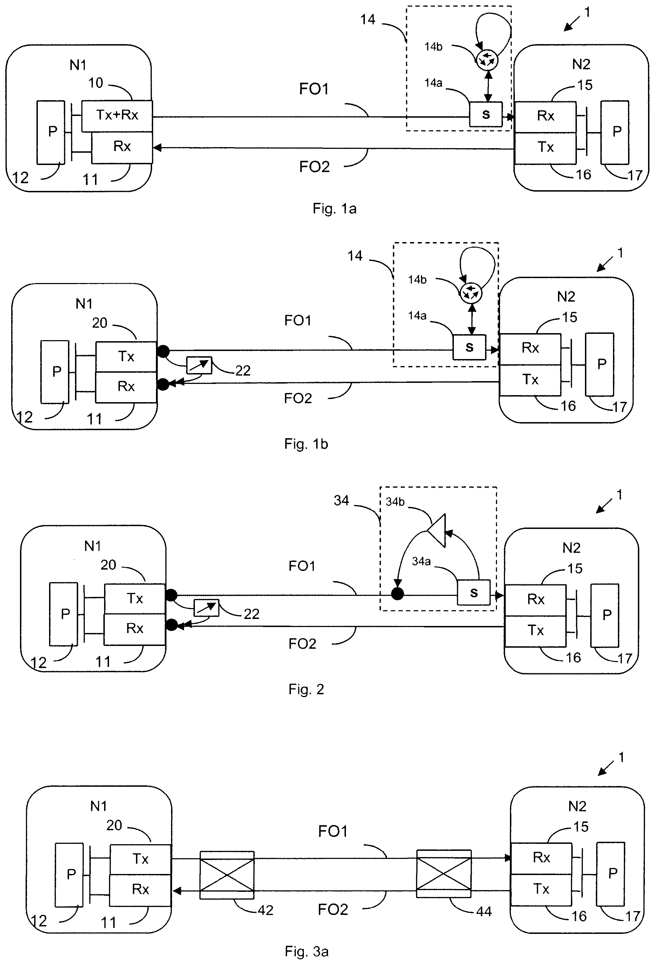

Les figures 1a, 1b, 2, 3a, 3b représentent un système 1 de mesure de temps de propagation d'un signal optique dans un réseau de transmission optique. Ce système 1 comprend deux équipements optiques N1, N2 selon des modes particuliers de réalisation de l'invention. Un signal optique est transmis du premier équipement N1 vers le deuxième équipement N2 au moyen d'une première fibre optique FO1. Un autre signal optique est transmis du deuxième équipement N2 vers le premier équipement N1 au moyen d'une deuxième fibre optique FO2. Cette deuxième fibre optique FO2 est distincte de la première fibre optique FO1. Par la suite, on se place dans ce cas particulier de deux fibres optiques distinctes.

Le premier mode de réalisation ainsi que ses variantes s'appuient sur un bouclage entièrement optique. Le deuxième mode de réalisation ainsi que sa variante s'appuient, quant à eux, sur un bouclage optique coopérant avec un traitement électronique.

Pour l'ensemble de ces modes de réalisation, le deuxième équipement optique N2 comprend des moyens de bouclage. Les moyens de bouclage sont formés de composants optiques. Les moyens de bouclage sont agencés pour :

- dans un premier mode de fonctionnement, acheminer un signal optique entre les deux équipements, c'est-à-dire diriger un signal optique reçu sur la première fibre optique FO1 vers des moyens de réception du deuxième équipement, et,
- dans un deuxième mode de fonctionnement, injecter dans la première fibre optique FO1 un signal émis en retour à un signal de mesure émis par le premier équipement.

Le premier mode de fonctionnement correspond ainsi à un mode de fonctionnement nominal, dans lequel les deux équipements s'échangent des signaux optiques au moyen des deux fibres optiques, une pour chaque sens de communication.

Pour déterminer un temps de propagation d'un signal optique, le premier équipement N1 émet un signal de mesure à destination du deuxième équipement N2 sur la première fibre optique FO1 et reçoit, grâce aux moyens de bouclage, un signal en retour émis par le deuxième équipement sur la première fibre optique. Le signal en retour empruntant la même fibre optique que le signal de mesure, il est alors possible de déterminer le temps de propagation sur cette fibre optique à partir de la mesure d'une durée entre l'instant d'émission du signal de mesure et l'instant de réception du signal en retour. Le temps de propagation ainsi déterminé n'est pas entaché d'une erreur liée à l'asymétrie des fibres optiques.

Le signal de mesure et le signal émis en retour sont définis ultérieurement en relation avec les modes de réalisation de l'invention.

Il est bien entendu que la description se place dans le cadre d'une détermination d'un temps de propagation d'un signal optique du premier équipement N1 vers le deuxième équipement N2. Ainsi, pour déterminer le temps de propagation d'un signal optique du deuxième équipement N2 vers le premier équipement N1, les moyens du deuxième équipement N2 doivent être prévus également au niveau du premier équipement N1 et réciproquement.

On se place par la suite dans le premier cas particulier d'un bouclage optique, correspondant au premier mode de réalisation.

Pour ce premier cas, le signal émis en retour par le deuxième équipement N2 correspond au signal de mesure émis par le premier équipement N1, atténué le cas échéant.

Le signal de mesure émis peut par exemple consister en une impulsion lumineuse, ou encore un signal d'horloge envoyé pendant une durée prédéterminée, ou encore une modulation particulière d'un signal lumineux, ou encore une trame ou un paquet prédéterminés.

Dans ce premier cas, le temps de propagation sur la première fibre optique FO1 est déterminé en théorie de façon quasi-exacte, car aucun traitement électronique n'est effectué sur le signal de mesure au sein du deuxième équipement N2.

Sur la figure 1a, sont représentés les deux équipements optiques N1, N2 selon une première variante du premier mode de réalisation.

Le premier équipement N1 comprend :

- un module de transmission et de réception 10, associé à la première fibre optique FO1, agencé pour émettre et recevoir un signal optique au moyen de la première fibre optique FO1 ;
- un module de réception 11, associé à la deuxième fibre optique FO2, agencé pour recevoir un signal optique au moyen de la deuxième fibre optique FO2 ;
- un module de traitement 12.

Le deuxième équipement N2 comprend :

- un module de réception 15, associé à la première fibre optique FO1, agencé pour recevoir un signal optique au moyen de la première fibre optique FO1 ;

- un module de transmission 16, associé à la deuxième fibre optique FO2, agencé pour transmettre un signal optique au moyen de la deuxième fibre optique FO2 ;
- un module de traitement 17.

Le deuxième équipement N2 comprend en outre des moyens de bouclage 14, tels que définis précédemment. Dans ce premier mode de réalisation, les moyens de bouclage 14 sont formés d'un commutateur optique 14a et d'un circulateur 14b. Le circulateur 14b permet d'éviter les problèmes d'interférences dans la boucle.

Le commutateur optique 14a permet dans une première position de diriger un signal optique reçu du premier équipement N1 sur la première fibre optique FO1 vers le module de réception 15 du deuxième équipement N2 en dehors des périodes de mesure du temps de propagation de la première fibre optique FO1. Dans une deuxième position, le commutateur optique 14a transmet le signal optique reçu du premier équipement N1 vers le circulateur 14b, qui transfère le signal dans une boucle et le transmet ensuite au commutateur optique 14a. Ainsi, dans cette deuxième position du commutateur 14a, les moyens de bouclage 14 permettent de réinjecter le signal optique reçu, celui-ci une fois réinjecté devenant le signal en retour pendant les périodes de mesure du temps de propagation de la première fibre optique FO1.

Il est ici souligné que les moyens de bouclage 14 n'apportent quasiment pas d'incertitude pour la mesure, le bouclage s'effectuant sur une longueur de boucle de l'ordre de quelques centimètres. La première fibre optique FO1, objet de la mesure, peut avoir, quant à elle, une longueur de l'ordre de quelques dizaines de kilomètres à mesurer.

Le commutateur optique 14a est un commutateur optique 1x2, ou bien 2x1, par exemple de type optomécanique. On peut par exemple choisir un commutateur dont la vitesse de commutation est de l'ordre de quelques millisecondes.

Sur la figure 1b est représentée une deuxième variante du premier mode de réalisation, dans laquelle seul le premier équipement N1 est modifié.

Le premier équipement N1 comprend le module de réception 11 et le module de traitement 12 décrits précédemment. Il comprend en outre un module de transmission 20, associé à la première fibre optique FO1, agencé pour émettre un signal optique au moyen de la première fibre optique FO1. Le premier équipement N1 comprend en outre un atténuateur variable 22 permettant dans une première position un mode de fonctionnement nominal et dans une deuxième position de rediriger un signal optique reçu au moyen de la première fibre optique FO1 vers le module de réception 11. Pour rappel, ce dernier est associé à la deuxième fibre optique FO2. Cette deuxième variante permet de s'affranchir de la partie réception du module 10, décrit précédemment en relation avec la figure 1a.

Optionnellement, pour ces deux variantes, les moyens de bouclage 14 comprennent également un amplificateur, non représenté sur les figures 1a et 1b, dans la boucle du circulateur. Ceci permet de s'assurer que le signal optique réinjecté a la puissance appropriée pour être détecté par le premier équipement N1 et ainsi d'utiliser un module de transmission et de réception 10 pour la première variante ou bien un module de réception 11 pour la deuxième variante, de sensibilité de réception classique d'un système en ligne, par exemple de l'ordre de - 24 dBm.

Sur la figure 2, sont représentés les deux équipements N1 et N2 dans une troisième variante du premier mode de réalisation. Le premier équipement N1 correspond à celui décrit en relation avec la figure 1b. Le deuxième équipement N2 correspond à celui décrit en relation avec les figures 1a et 1b, hormis les moyens de bouclage.

Le deuxième équipement N2 comprend des moyens de bouclage 34. Ces moyens de bouclage 34 sont formés d'un commutateur optique 34a, d'un amplificateur 34b et d'un coupleur. Le coupleur est placé sur la première fibre optique FO1 pour recevoir les signaux optiques en provenance du premier équipement N1 et les transmettre au commutateur optique 34a et pour injecter dans la première fibre optique FO1 un signal optique reçu de l'amplificateur 34b. L'amplificateur 34b a également un rôle d'isolateur. Dans une première position du commutateur optique 34a, un signal optique reçu sur la première fibre optique FO1 par l'intermédiaire du coupleur est transmis au module de réception 15 du deuxième équipement N2. Dans une deuxième position du commutateur optique 34a, un signal optique reçu sur la première fibre optique FO1 par l'intermédiaire du coupleur est transmis à l'amplificateur 34b. L'amplificateur 34b amplifie le signal optique et le transmet au coupleur qui l'injecte dans la première fibre optique FO1 à destination du premier équipement N1, celui-ci une fois injecté devenant le signal en retour pendant les périodes de mesure du temps de propagation.

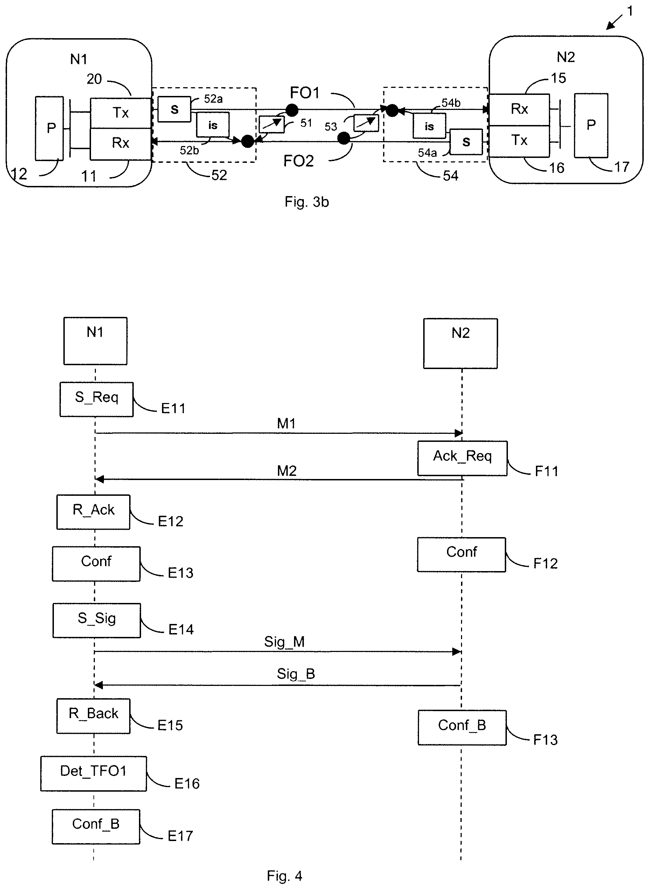

Pour ces trois variantes du premier mode de réalisation, les fonctions des modules de traitement 12 et 17 des premier et deuxième équipements sont précisées ultérieurement en relation avec la figure 4.

La figure 4 représente les étapes des procédés de mesure et de détermination d'un temps de propagation d'un signal optique entre deux équipements dans un réseau de transmission optique selon le premier mode de réalisation. De façon générale, le procédé de mesure consiste à mettre en oeuvre un bouclage au niveau du deuxième équipement.

Le procédé de mesure d'un temps de propagation est mis en oeuvre par le deuxième équipement N2 et le procédé de détermination d'un temps de propagation est mis en oeuvre par le premier équipement N1 pour obtenir un temps de propagation d'un signal optique au moyen de la première fibre optique FO1 entre les deux équipements N1, N2.

Les moyens de bouclage 14, 34 sont positionnés initialement dans le premier mode de fonctionnement.

Dans une étape E11 du procédé de détermination, le premier équipement N1 émet une requête de mesure M1 d'un temps de propagation d'un signal de mesure au moyen de la première fibre FO1 à destination du deuxième équipement N2. Plus précisément, le module de traitement 12 demande l'émission de la requête de mesure au module de transmission 10 ou 20. Optionnellement, le premier équipement N1 déclenche une temporisation pour superviser la réception d'un acquittement en provenance du deuxième équipement N2. Si à l'expiration de cette temporisation, aucun message d'acquittement n'est reçu, le premier équipement N1 réinitialise l'envoi de la requête de mesure. La phase de mesure débute pour le premier équipement N1 avec l'émission de la requête de mesure.

Cette requête de mesure est reçue par le deuxième équipement N2 dans une étape F11 du procédé de mesure, par l'intermédiaire du module de réception 15. Le deuxième équipement N2 détecte ainsi avec la réception de la requête de mesure que le premier équipement N1 a déclenché une mesure. La phase de mesure débute pour le deuxième équipement N2 avec la réception de la requête de mesure.

Le deuxième équipement N2 émet alors, toujours dans cette étape F11, un signal d'acquittement M2 de la requête de mesure. Plus précisément, le module de traitement 17 demande au module de transmission 16 d'émettre le signal d'acquittement. Pour rappel, le signal d'acquittement est acheminé au moyen de la fibre optique FO2.

Dans une étape F12, le module de traitement 17 du deuxième équipement M2 configure alors les moyens de bouclage 14, 34 vers le deuxième mode de fonctionnement, tels que décrits précédemment et dans lequel un signal en retour est injecté dans la première fibre optique FO1 en réponse à un signal de mesure émis par le premier équipement N1. Lorsque le signal de mesure emprunte un lien ou un canal utilisé pour acheminer du trafic, le deuxième équipement N2 notifie les équipements auxquels il est raccordé que le lien ou le canal est hors service et indisponible pendant la durée de la mesure.

Le signal d'acquittement M2 est reçu par le premier équipement N1 dans une étape E12 du procédé de détermination. Plus précisément le signal d'acquittement est reçu par le module de réception 10 ou 11 et transmis au module de traitement 12.

Si nécessaire, notamment lorsque le premier équipement N1 comprend l'atténuateur variable 22, le module de traitement 12 configure les moyens nécessaires à la réception du signal de réponse dans une étape E13 du procédé de détermination. Lorsque le signal de mesure emprunte un lien ou un canal utilisé pour acheminer du trafic, le premier équipement N1 notifie les équipements auxquels il est raccordé que le lien ou le canal est hors service et indisponible pendant la durée de la mesure.

Dans une étape E14 du procédé de détermination, le premier équipement N1 transmet le signal de mesure Sig_M au moyen de la première fibre optique FO1 à destination du deuxième équipement N2. Plus précisément, le module de traitement 12 demande au module de transmission 10 ou 20 d'émettre le signal de mesure Sig_M et mémorise l'instant d'émission $t_e$. Optionnellement, le module de traitement 12 déclenche une temporisation pour superviser la réception du signal en retour en provenance du deuxième équipement N2.

Le signal de mesure est alors traité optiquement par les moyens de bouclage 14, 34.

Les moyens de bouclage 14, 34 permettent d'injecter dans la première fibre optique FO1 un signal en retour Sig_B. Ce premier mode de réalisation des moyens de bouclage 14, 34 étant optique, le signal de mesure n'est pas traité électroniquement au deuxième équipement N2.

Dans une étape E15 du procédé de détermination, le signal en retour est reçu au premier équipement N1 par l'intermédiaire des modules de réception 11 ou 10 et transmis au module de traitement 12. L'instant de réception $t_r$ est également mémorisé.

Il est ici souligné que le module de traitement 12 peut coopérer avec une assistance matérielle électronique, par exemple un circuit logique programmable de type FPGA, pour « Field-Programmable Gate Array », pour déterminer de façon précise les instants d'émission et de réception.

Dans une étape E16 du procédé de détermination, le module de traitement 12 détermine le temps de propagation du signal de mesure $t_{FO1}$ à partir des instants d'émission du signal de mesure et de réception du signal en retour :

$$t_{FO1} = (t_r - t_e)/2$$

Dans une étape F13 du procédé de mesure, le module de traitement 17 du deuxième équipement configure les moyens de bouclage 14, 34 dans le premier mode de fonctionnement et si nécessaire, notifie les équipements auxquels il est raccordé de la remise en service du lien ou du canal utilisé pour la mesure. La mesure est terminée pour le deuxième équipement N2.

Dans une étape E17 du procédé de détermination, le module de traitement 12 du premier équipement configure, le cas échéant, l'atténuateur variable 22 dans sa position de fonctionnement nominal et si nécessaire, notifie les équipements auxquels il est raccordé de la remise en service du lien ou du canal utilisé pour la mesure. La mesure est terminée pour le premier équipement N1.

On se place par la suite dans le deuxième cas particulier d'un traitement électronique contribuant au bouclage, correspondant au deuxième mode de réalisation.

Pour ce deuxième cas, le signal de mesure peut consister en une impulsion lumineuse, ou encore un signal d'horloge envoyé pendant une durée prédéterminée, ou encore une modulation particulière du signal lumineux, ou encore une trame ou un paquet pouvant être facilement identifiés par le deuxième équipement N2 comme une trame ou paquet de mesure de temps de propagation. Le signal en retour peut consister en une trame ou un paquet indiquant au premier équipement N1 le temps de traitement électronique au niveau du deuxième équipement N2. Il peut également être identique au signal de mesure si le temps de traitement électronique est transmis par d'autres moyens au premier équipement N1.

Sur la figure 3a, sont représentés les deux équipements optiques N1, N2 selon une première variante du deuxième mode de réalisation.

Le premier équipement N1 comprend :

- un module de transmission 20, agencé pour émettre un signal optique ;
- un module de réception 11, agencé pour recevoir un signal optique ;
- un module de traitement 12.

Le premier équipement N1 comprend en outre un commutateur optique 42. Dans un premier mode de fonctionnement, correspondant à une première position dite position parallèle, le commutateur optique 42 permet de diriger un signal optique transmis par le module de transmission 20 du premier équipement N1 vers le deuxième équipement N2 sur la première fibre optique FO1 et un signal optique reçu en provenance du deuxième équipement N2 sur la deuxième fibre optique FO2 vers le module de réception 11 du premier équipement N1. Dans un deuxième mode de fonctionnement, correspondant à une deuxième position dite position croisée, le commutateur optique 42 permet de diriger un signal optique transmis par le module de transmission 20 du premier équipement N1 vers le deuxième équipement N2 sur la deuxième fibre optique FO2 et un signal optique reçu en provenance du deuxième équipement N2 sur la première fibre optique FO1 vers le module de réception 11 du premier équipement N1.

Le deuxième équipement N2 comprend :

- un module de réception 15, agencé pour recevoir un signal optique ;
- un module de transmission 16, agencé pour transmettre un signal optique ;
- un module de traitement 17.

Le deuxième équipement N2 comprend en outre un commutateur optique 44. Dans un premier mode de fonctionnement, correspondant à une première position dite position parallèle, le commutateur optique 44 permet de diriger un signal optique reçu sur la première fibre optique FO1 vers le module de réception 15 du deuxième équipement N2 et un signal optique reçu en provenance du module de transmission 16 du deuxième équipement N2 vers le premier équipement N1 sur la deuxième fibre optique FO2. Dans un deuxième mode de fonctionnement, correspondant à une deuxième position dite position croisée, le commutateur optique 44 transmet un signal optique reçu sur la deuxième fibre optique FO2 vers le module de réception 15 du deuxième équipement N2 et transmet un signal optique reçu du module de transmission 16 du deuxième équipement N2 vers le premier équipement N1 au moyen de la première fibre optique FO1.

Les commutateurs optiques 42 et 44 sont des commutateurs optiques 2x2, par exemple de type opto-mécanique.

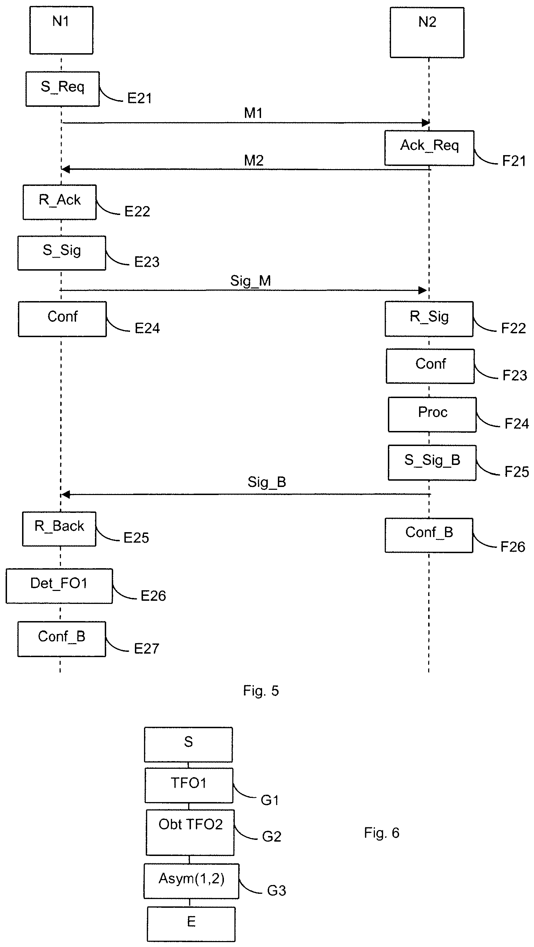

Les fonctions des modules de traitement 12 et 17 des premier et deuxième équipements sont précisées ultérieurement en relation avec la figure 5. Toutefois, il est ici souligné que le module de traitement 17 est notamment agencé pour recevoir un signal de mesure reçu du module de réception 15 et transmettre un signal en retour au module de transmission 16. Ainsi, pour cette première variante, le module de traitement 17 coopère avec le commutateur optique 44 pour injecter le signal en retour sur la première fibre optique FO1.

La figure 5 représente les étapes des procédés de mesure et de détermination d'un temps de propagation d'un signal optique entre deux équipements dans un réseau de transmission optique selon la première variante du deuxième mode de réalisation.

Le procédé de mesure d'un temps de propagation est mis en oeuvre par le deuxième équipement N2 et le procédé de détermination d'un temps de propagation est mis en oeuvre par le premier équipement N1 pour obtenir un temps de propagation d'un signal optique au moyen de la première fibre optique FO1 entre les deux équipements N1, N2.

Les commutateurs optiques 42, 44 sont positionnés initialement dans le premier mode de fonctionnement (positions parallèles).

Dans une étape E21 du procédé de détermination, le premier équipement N1 émet une requête de mesure M1 du temps de propagation d'un signal de mesure au moyen de la première fibre FO1 à destination du deuxième équipement N2. Plus précisément, le module de traitement 12 demande l'émission d'une requête de mesure au module de transmission 20. Optionnellement, le premier équipement N1 déclenche une temporisation pour superviser la réception d'un acquittement en provenance du deuxième équipement N2. Si, à l'expiration de cette temporisation, aucun message d'acquittement n'est reçu, le premier équipement N1 réinitialise l'envoi de la requête de mesure. La phase de mesure débute pour le premier équipement N1 avec l'émission de la requête de mesure.

Cette requête de mesure est reçue par le deuxième équipement N2 dans une étape F21 du procédé de mesure, par l'intermédiaire du module de réception 15. Le deuxième équipement N2 détecte ainsi avec la réception de la requête de mesure que le premier équipement N1 a déclenché une mesure. La phase de mesure débute pour le deuxième équipement N2 avec la réception de la requête de mesure.

Le deuxième équipement émet alors, toujours dans cette étape F21, un signal d'acquittement M2 de la requête de mesure. Plus précisément, le module de traitement 17 demande au module de transmission 16 d'émettre le signal d'acquittement. Pour rappel, le signal d'acquittement est acheminé au moyen de la fibre optique FO2. Lorsque le signal de mesure emprunte un lien ou un canal utilisé pour acheminer du trafic, le deuxième équipement N2 notifie les équipements auxquels il est raccordé que le lien ou le canal est hors service et indisponible pendant la période de mesure.

Le signal d'acquittement M2 est reçu par le premier équipement N1 dans une étape E22 du procédé de détermination. Plus précisément le signal d'acquittement est reçu par le module de réception 11 et transmis au module de traitement 12. Lorsque le signal de mesure emprunte un lien ou un canal utilisé pour acheminer du trafic, le premier équipement N1 notifie les équipements auxquels il est raccordé que le lien ou le canal est hors service et indisponible pendant la période de mesure.

Dans une étape E23 du procédé de détermination, le premier équipement N1 transmet le signal de mesure Sig_M au moyen de la première fibre optique FO1. Plus précisément, le module de traitement 12 demande au module de transmission 20 d'émettre le signal de mesure Sig_M et mémorise l'instant d'émission $t_e$. Optionnellement, le module de traitement 12 déclenche une temporisation pour superviser la réception du signal en retour en provenance du deuxième équipement N2.

Dans une étape E24 du procédé de détermination, le module de traitement 12 configure les moyens nécessaires à la réception du signal en retour. Plus précisément, le module de traitement 12 configure les moyens de bouclage 42 dans le deuxième mode de fonctionnement (position croisée) immédiatement après la transmission du signal de mesure. Si à l'expiration de la temporisation déclenchée à l'étape E23, aucun signal en retour n'est reçu, le premier équipement N1 reconfigure les moyens de bouclage 42 dans le premier mode de fonctionnement (position parallèle).

Dans une étape F22 du procédé de mesure, le deuxième équipement N2, plus précisément le module de traitement 17, reçoit le signal de mesure Sig_M par l'intermédiaire du module de réception 15. Le module de traitement 17 mémorise l'instant de réception du signal de mesure Sig_M pour déterminer le temps de traitement électronique.

Dans une étape F23 du procédé de mesure, le module de traitement 17 du deuxième équipement M2 configure alors le commutateur optique 44 vers le deuxième mode de fonctionnement (position croisée), tel que décrit précédemment, dès réception du signal de mesure. Le commutateur optique 44 est alors configuré pour injecter dans la première fibre optique FO1 un signal en retour Sig_B en réponse au signal de mesure émis par le premier équipement N1.

Pendant cette étape F23 de configuration, le module de traitement 17 détermine dans une étape F24 un temps de traitement interne au deuxième équipement N2. Le temps de traitement interne est déterminé avec une assistance matérielle électronique, par exemple un circuit logique programmable de type FPGA. Ce temps de traitement interne $t_{int}$ prend en compte le temps nécessaire à la configuration du commutateur optique 44.

Dans une étape F25, le module de traitement 17 demande au module de transmission 16 d'émettre le signal en retour Sig_B, celui-ci comprenant le temps de traitement interne déterminé $t_{int}$ à l'étape F24. Optionnellement, le temps de traitement interne est transmis dans un second message de réponse ultérieur.

Dans une étape E25 du procédé de détermination, le signal en retour Sig_B est reçu au premier équipement N1 par l'intermédiaire du module de réception 11 et transmis au module de traitement 12. L'instant de réception $t_r$ est également mémorisé.

Il est ici souligné que le module de traitement 12 peut coopérer avec une assistance matérielle électronique, par exemple un circuit logique programmable de type FPGA, pour déterminer de façon précise les instants d'émission et de réception.

Dans une étape E26 du procédé de détermination, le module de traitement 12 détermine le temps de propagation $t_{FO1}$ du signal de mesure à partir des instants d'émission du signal de mesure, de réception du signal en retour et du temps de traitement interne au deuxième équipement N2 reçu :

$$t_{FO1} = (t_r - t_e - t_{int})/2$$

Dans une étape F26 du procédé de mesure, le module de traitement 17 du deuxième équipement configure le commutateur optique 44 dans le premier mode de fonctionnement (position parallèle) et si nécessaire, notifie les équipements auxquels il est raccordé de la remise en service du lien ou du canal utilisé pour la mesure. La mesure est terminée pour le deuxième équipement N2. Dans une étape E27 du procédé de détermination, le module de traitement 12 du premier équipement configure le commutateur optique 42 dans le premier mode de fonctionnement (position parallèle) et si nécessaire, notifie les équipements auxquels il est raccordé de la remise en service du lien ou du canal utilisé pour la mesure. La mesure est terminée pour le premier équipement N1.

Il est ici souligné que de façon préférentielle le commutateur optique 44 doit être choisi de telle façon que le changement de position du commutateur optique 44 à l'étape F23 puisse se réaliser en un temps assez court, inférieur à une milliseconde, de sorte que le temps de traitement électronique dans le deuxième équipement N2 ne soit pas trop long. En effet, dans le cas contraire et si l'horloge en fréquence du deuxième équipement N2 n'est pas assez précise, une erreur peut affecter la mesure du temps de traitement. Les caractéristiques techniques de certains commutateurs optiques permettent de respecter cette contrainte. Les contraintes sur le premier commutateur optique 42 sont par contre moins importantes lorsque la mesure d'un temps de propagation de la première fibre optique FO1 est en cours. Toutefois, comme ce commutateur optique 42 est également utilisé pour la mesure d'un temps de propagation sur la deuxième fibre optique FO2, la même contrainte s'applique.

Le deuxième mode de réalisation peut avantageusement être mis en oeuvre en utilisant les messages définis par le protocole PTP. Le message PTP « Peer_Delay_Request » est alors le signal de mesure émis par le premier équipement N1 et le message PTP « Peer_Delay_Response » le signal en retour. Dans le cas où le temps de traitement interne est transmis indépendamment du signal en retour, il est possible d'utiliser le message PTP « Peer_Delay_Response_Follow_up ». Ces signaux utilisés pour la mesure sont en charge de transporter les estampilles temporelles nécessaires pour indiquer au premier équipement N1 le temps de traitement électronique.

En d'autre termes, le mécanisme « Peer Delay Link Measurement » prévu dans la norme PTP pour fournir un temps de traitement interne, ce mécanisme permettant de mesurer un temps de propagation aller et retour par l'intermédiaire de deux liaisons, par exemple des fibres optiques distinctes, est utilisé pour mettre en oeuvre les procédés tels que décrits précédemment sur une seule et même fibre optique.

Sur la figure 3b, sont représentés les deux équipements optiques N1, N2 selon une deuxième variante du deuxième mode de réalisation.

A la place du commutateur optique 42, le premier équipement N1 comprend des moyens de bouclage 52 comprenant un commutateur optique 52a, un isolateur 52b et un coupleur. Le commutateur optique 52a permet de faire émettre le module de transmission 20 vers la deuxième fibre FO2 pendant la période de mesure. L'isolateur 52b permet d'éviter que le signal de mesure dans le sens aller ne soit reçu par le module de transmission 20 pendant la période de mesure. Un deuxième isolateur, non représenté sur la figure 3b, peut également être ajouté en sortie du commutateur optique 52a sur la première fibre optique FO1 pour protéger le module de transmission 20 pendant la période de mesure.

Un atténuateur variable 51 est placé entre les première et deuxième fibres optiques et permet de s'assurer qu'en dehors des périodes de mesure, le signal rétrodiffusé de la première fibre FO1 ne perturbe pas le module de réception 11 du premier équipement N1.

De manière équivalente, à la place du commutateur optique 44, le deuxième équipement N2 comprend des moyens de bouclage 54 comprenant un commutateur optique 54a, un isolateur 54b et un coupleur.

Le commutateur optique 54a permet de faire émettre le module de transmission 16 vers la première fibre FO1 pendant la période de mesure. L'isolateur 54b permet d'éviter que le signal de mesure dans le sens aller ne soit reçu par le module de transmission 16 pendant la période de mesure. Un deuxième isolateur, non représenté sur la figure 3b, peut également être ajouté en sortie du commutateur optique 54a sur la deuxième fibre optique FO2 pour protéger le module de transmission 16 pendant la période de mesure.

Un atténuateur variable 53 est placé entre les première et deuxième fibres optiques et permet de s'assurer qu'en dehors des périodes de mesure, le signal envoyé par le module de transmission 16 ne perturbe pas le module de réception 11 du premier équipement N1.

En fonctionnement, lorsqu'une mesure d'un temps de propagation sur la première fibre optique FO1 est déclenchée par le premier équipement N1, l'atténuateur 51 du premier équipement N1 ouvre la connexion optique entre la première fibre optique FO1 et le module de réception 11 du premier équipement N1 et le commutateur optique 54a du deuxième équipement N2 se positionne de sorte que le module de transmission 16 du deuxième équipement 2 émette vers la première fibre optique FO1. Lors de la mesure sur la première fibre optique FO1, l'atténuateur 53 du deuxième équipement N2 reste en position fermée, et le commutateur optique du premier équipement N1 en position normale, connecté à la première fibre optique FO1.

L'étape E24 de configuration du procédé de détermination est ainsi mise en oeuvre dès la fin de l'étape E22 et préalablement à l'émission (E23) du signal de mesure pour cette deuxième variante. L'étape F23 de configuration du procédé de mesure est ainsi mise en oeuvre dès la fin de l'étape F21 et préalablement à la réception (F22) du signal de mesure pour cette deuxième variante.

A l'étape E23, le module de transmission 20 du premier équipement N1 envoie le signal de mesure vers le deuxième équipement N2. Ce signal de mesure est reçu par le module de réception 15 du deuxième équipement N2 à l'étape F22, et traité en électronique avec un délai variable, mais qui est mesuré précisément par le deuxième équipement N2 à l'étape F24.

A l'étape F25, le module de transmission 16 du deuxième équipement N2 renvoie vers le premier équipement N1 sur la première fibre optique FO1 le signal en retour indiquant la mesure du temps de traitement par l'intermédiaire du commutateur optique 54a du deuxième équipement N2 préalablement positionné pour émettre vers la première fibre optique FO1 et le coupleur optique. Ce signal en retour est reçu, à l'étape E25, par le module de réception 11 du premier équipement N1, par l'intermédiaire de l'atténuateur du premier équipement N1 à présent ouvert et les coupleurs optiques. A l'étape E26, en analysant ce signal en retour, le premier équipement N1 obtient le temps de traitement électronique dans le deuxième équipement N2, et peut ainsi déterminer à l'étape E26 le temps de propagation sur la première fibre optique FO1.

Il est ici souligné que la description des modes de réalisation a été faite pour des modes de réalisation particuliers dans lesquels les signaux de commande, c'est-à-dire la requête de mesure et l'acquittement correspondant, empruntent un même chemin que les signaux optiques. Aucune limitation n'est attachée à ces modes de réalisation particuliers, les signaux de commande pouvant emprunter des chemins différents que les signaux optiques de mesure.

Ces modes de réalisation sont également compatibles avec des mises en oeuvre, dans lesquels un gestionnaire centralisé s'interface entre les deux équipements pour les acheminements des signaux de commande.

Pour les deux modes de réalisation décrits, la mesure du temps de propagation peut être réalisée plusieurs fois, afin de pouvoir déterminer un temps de propagation moyenné. Ceci permet de limiter les incertitudes sur la mesure ainsi que les effets de variations de température.

Du fait de l'ordre de grandeur des temps mesurés, de l'ordre de quelques millisecondes en général, l'inexactitude de la mesure du fait d'une horloge peu précise est négligeable, dès lors que l'oscillateur mis en oeuvre dans l'équipement est de qualité suffisante. Ceci s'applique également dans le cas où l'équipement initiant la mesure n'est pas synchronisé correctement en fréquence. Par exemple, un oscillateur avec une dérive à un ppm accumule une nanoseconde d'erreur sur une milliseconde. Il est ici souligné qu'il est possible d'utiliser des oscillateurs bien meilleurs, par exemple, avec une dérive à un ppb. Les résultats les meilleurs sont obtenus lorsque le premier équipement initiant la mesure est synchronisé en fréquence, de façon à limiter au maximum cette imprécision de mesure. De façon similaire, il est préférable de synchroniser en fréquence le deuxième équipement pour obtenir une mesure du temps de traitement interne électronique précise.

Les procédés de détermination et de mesure d'un temps de propagation, tels que décrits précédemment, trouvent une application particulièrement avantageuse pour déterminer une asymétrie de deux fibres optiques, décrite en relation avec la figure 6.

Dans une étape G1 du procédé de détermination d'une asymétrie, le premier équipement N1 détermine un premier temps de propagation $t_{FO1}$ d'un signal optique au moyen de la première fibre optique FO1 par la mise en oeuvre du procédé de détermination d'un temps de propagation tel que décrit précédemment en coopérant avec le deuxième équipement N2, lequel met en oeuvre le procédé de mesure décrit précédemment et transmet ce premier temps de propagation au deuxième équipement N2. Le deuxième équipement N2 détermine un deuxième temps de propagation $t_{FO2}$ d'un signal optique au moyen de la deuxième fibre optique FO2 par la mise en oeuvre du procédé de détermination d'un temps de propagation tel que décrit précédemment en coopérant avec le premier équipement N1, lequel met en oeuvre le procédé de mesure décrit précédemment et transmet ce deuxième temps de propagation au premier équipement N1. Le premier équipement N1 reçoit le deuxième temps de propagation dans une étape G2 du procédé de détermination d'une asymétrie.

Dans une étape G3 du procédé de détermination d'une asymétrie, le premier équipement N1 détermine une asymétrie entre les deux fibres optiques. Le premier équipement N1 peut ainsi corriger des messages PTP reçus ultérieurement pour compenser cette asymétrie, tel que cela est décrit dans la section 11.6 de la norme IEEE 1588-2008.

Les différentes figures 1a, 1b, 2, 3a, 3b illustrent des cas particuliers où le signal optique est porté par une seule longueur d'onde. Les modes de réalisation sont aisément transposables à des cas où les fibres optiques portent respectivement un signal optique WDM, pour « Wavelength Division Multiplexing » en anglais, composé de plusieurs signaux de longueurs d'onde différentes. Pour ce type de signal optique, les moyens de bouclage décrits précédemment sont placés avant le multiplexeur WDM au premier équipement N1 et après le démultiplexeur WDM au deuxième équipement N2. On se ramène ainsi au cas d'une seule longueur d'onde.

Le signal de mesure peut être porté par un canal utilisé pour acheminer du trafic utilisateur en dehors de la période de mesure. Il peut par exemple s'agir d'un lien optique non WDM transportant du trafic, ou bien dans le cas d'un système WDM, d'une longueur d'onde utilisée également pour transporter du trafic. Dans ce cas, la mesure ne peut pas être effectuée lorsque du trafic est transporté dans le canal, car l'émission du signal en retour sur la première fibre optique perturbe la transmission du trafic utilisateur sur les première et deuxième fibres. Il est donc nécessaire de bloquer le trafic utilisateur sur ce canal pendant la mesure du temps de propagation.

Dans le cas WDM, le fonctionnement des autres longueurs d'onde n'est pas perturbé.

Il est ici souligné que le fait de bloquer le trafic pendant la mesure n'a qu'un très faible impact car cette mesure est de courte durée.

De plus, seules des mesures à la mise en service de la liaison ou après une perte de la liaison sont nécessaires. On peut également compléter avec une mesure régulière, par exemple hebdomadaire. En effet, la longueur des fibres varie peu et lentement, par exemple en fonction des changements de températures du sol au fil des saisons pour une fibre enterrée.

On peut également utiliser un canal de transmission dédié à la mesure. Il peut par exemple s'agir d'une longueur d'onde dédiée pour transporter le signal de mesure. La longueur d'onde sélectionnée doit traverser tous les éléments qui contribuent au temps de propagation. Dans ce cas, il n'est pas nécessaire de bloquer le trafic pendant la mesure du temps de propagation.

On peut noter que pour ce cas de réalisation particulier (utilisation d'un canal de transmission dédié à la mesure), et notamment dans la première variante du deuxième mode de réalisation, les échanges des messages de requête de mesure M1 et de l'acquittement M2 peuvent avantageusement être remplacés par une détection par le deuxième équipement N2 à l'étape F22 d'une réception du signal de mesure en provenance du premier équipement N1. Ceci est rendu possible du fait que l'étape de configuration F23 est ultérieure à la réception (F22) du signal de mesure Sig_M. Le deuxième équipement N2 détecte ainsi avec la réception du signal de mesure que le premier équipement N1 a déclenché une mesure. La phase de mesure débute pour le deuxième équipement N2 avec la réception du signal de mesure.

Il est ici souligné que lorsque la mesure du temps de propagation est effectuée sur une longueur d'onde dédiée, il est possible de déduire le temps de propagation sur les autres longueurs d'onde utiles transportant des données utilisateurs. Cependant, du fait de la dispersion chromatique, les délais sur les différentes longueurs d'onde ne sont pas exactement les mêmes. Selon la distance de la liaison, cet écart peut être plus ou moins important. Par exemple, on peut avoir jusqu'à 40 nanosecondes d'incertitude sur 80 kilomètres de liaison non compensée due à la dispersion chromatique pour 30 nanomètres d'écart de longueur d'onde. Cet écart peut atteindre 80 nanomètres entre les bandes C et L. Dans ce cas, on voit que l'écart n'est pas négligeable par rapport aux objectifs d'exactitude.

Afin de corriger cette erreur due à la dispersion chromatique, il est possible de compenser automatiquement par calcul la différence de mesure du temps de propagation entre la longueur d'onde utilisée pour la mesure et chaque longueur d'onde utile à partir de la connaissance de chaque longueur d'onde et de la distance du lien, qui est connue de façon assez précise grâce à la mesure du temps de propagation. Plusieurs modèles sont possibles pour effectuer ce calcul (voir par exemple, Govind P. Agrawal, "Nonlinear Fiber Optics", Academic Press, 1989). Il est important toutefois que les valeurs de la dispersion par longueur d'onde soient mémorisées dans les équipements.

De plus, lorsque la mesure du temps de propagation est effectuée sur une longueur d'onde dédiée, il est possible d'utiliser des longueurs d'onde différentes dans le sens aller et retour. Ce cas de figure peut être considéré comme un cas où les signaux sont différents dans les sens aller et retour. Il convient dans ce cas de prendre en compte et de compenser les effets de la dispersion chromatique.

Le module de traitement 12 du premier équipement N1 est agencé pour mettre en oeuvre les étapes du procédé de détermination d'un temps de propagation précédemment décrit exécutées par l'équipement. Il s'agit de préférence de modules logiciels comprenant des instructions logicielles pour faire exécuter les étapes du procédé de détermination d'un temps de propagation précédemment décrit, mises en oeuvre par un équipement optique. L'invention concerne donc aussi :

- un programme pour équipement, comprenant des instructions de programme destinées à commander l'exécution des étapes du procédé de détermination d'un temps de propagation précédemment décrit qui sont exécutées par ledit équipement, lorsque ledit programme est exécuté par un processeur de celui-ci ;
- un support d'enregistrement lisible par un équipement sur lequel est enregistré le programme pour équipement.

Le module de traitement 17 du deuxième équipement N2 est agencé pour mettre en oeuvre les étapes du procédé de mesure précédemment décrit exécutées par l'équipement. Il s'agit de préférence de modules logiciels comprenant des instructions logicielles pour faire exécuter les étapes du procédé de mesure précédemment décrit, mises en oeuvre par un équipement optique. L'invention concerne donc aussi :

- un programme pour équipement, comprenant des instructions de programme destinées à commander l'exécution des étapes du procédé de mesure précédemment décrit qui sont exécutées par ledit équipement, lorsque ledit programme est exécuté par un processeur de celui-ci ;
- un support d'enregistrement lisible par un équipement sur lequel est enregistré le programme pour équipement.

Le module de traitement 12, 17 de l'équipement N1, N2 est agencé pour mettre en oeuvre les étapes du procédé de détermination d'une asymétrie précédemment décrit exécutées par l'équipement. Il s'agit de préférence de modules logiciels comprenant des instructions logicielles pour faire exécuter les étapes du procédé de détermination d'une asymétrie précédemment décrit, mises en oeuvre par un équipement optique. L'invention concerne donc aussi :

- un programme pour équipement, comprenant des instructions de programme destinées à commander l'exécution des étapes du procédé de détermination d'une asymétrie précédemment décrit qui sont exécutées par ledit équipement, lorsque ledit programme est exécuté par un processeur de celui-ci ;
- un support d'enregistrement lisible par un équipement sur lequel est enregistré le programme pour équipement.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

**Revendications**

1. Procédé de mesure d'un temps de propagation d'un signal optique entre deux équipements (N1, N2) dans un réseau de transmission optique, le signal optique étant transmis du premier équipement vers le deuxième équipement au moyen d'une première fibre optique (FO1) et du deuxième équipement vers le premier équipement au moyen d'une deuxième fibre optique (FO2), distincte de la première fibre optique, le deuxième équipement comprenant des moyens dits de bouclage (14, 34, 44, 54), aptes dans un premier mode à diriger un signal optique reçu sur la première fibre optique vers des moyens de réception du deuxième équipement, ledit procédé de mesure comprenant les étapes suivantes mises en oeuvre par le deuxième équipement :

   - une étape de détection (F11, F21, F22), au cours de laquelle un déclenchement d'une mesure du temps de propagation d'un signal de mesure est détecté, le signal de mesure étant émis par le premier équipement au moyen de la première fibre optique ;
   - une étape de configuration (F12, F23) des moyens de bouclage vers un deuxième mode, ledit deuxième mode permettant d'injecter dans la première fibre optique un signal en retour au signal de mesure émis par le premier équipement.

2. Procédé de mesure selon la revendication 1, dans lequel l'étape de détection consiste en une étape de réception d'une requête de mesure du temps de propagation, ladite requête étant transmise par le premier équipement.

3. Procédé de mesure selon la revendication 1, comprenant une étape de détermination (F24) d'un temps de traitement au deuxième équipement, le temps de traitement étant transmis en retour au premier équipement.

4. Procédé de mesure selon la revendication 3, dans lequel l'étape de détection consiste en une étape de réception du signal de mesure en provenance du premier équipement.

5. Procédé de détermination d'un temps de propagation d'un signal optique entre deux équipements (N1, N2) dans un réseau de transmission optique, le signal optique étant transmis du premier équipement vers le deuxième équipement au moyen d'une première fibre optique (FO1) et du deuxième équipement vers le premier équipement au moyen d'une deuxième fibre optique (FO2), distincte de la première fibre optique, le deuxième équipement mettant en oeuvre le procédé de mesure selon la revendication 1, ledit procédé de détermination comprenant les étapes suivantes mises en oeuvre par le premier équipement :

- une étape de déclenchement (E11, E21, E14, E23) d'une mesure du temps de propagation d'un signal de mesure au moyen de la première fibre, le signal de mesure étant émis vers le deuxième équipement au moyen de la première fibre optique ;
- une étape de réception (E15, E25) d'un signal en retour émis par le deuxième équipement sur la première fibre optique ;
- une étape de détermination (E16, E26) dudit temps de propagation à partir d'un instant d'émission du signal de mesure et d'un instant de réception du signal en retour.

6. Procédé de détermination selon la revendication 5, comprenant en outre une étape de réception du temps de traitement au deuxième équipement, le deuxième équipement mettant en oeuvre le procédé de mesure selon la revendication 3, et dans lequel l'étape de détermination du temps de propagation prend également en compte ledit temps de traitement.

7. Procédé de détermination d'une asymétrie entre deux fibres optiques reliant deux équipements (N1, N2) dans un réseau de transmission optique, un signal optique étant transmis du premier équipement vers le deuxième équipement au moyen d'une première fibre optique (FO1) et du deuxième équipement vers le premier équipement au moyen d'une deuxième fibre optique (FO2), distincte de la première fibre optique, dans lequel :

le premier, respectivement le deuxième, équipement met en oeuvre un procédé de détermination d'un premier, respectivement un deuxième, temps de propagation d'un signal optique au moyen de la première, respectivement la deuxième, fibre optique selon la revendication 5 ou 6 en coopérant avec le deuxième, respectivement le premier, équipement mettant en oeuvre le procédé de mesure selon la revendication 1 ou 3 ;
ledit procédé comprenant les étapes suivantes mises en oeuvre par le premier équipement :

- une étape de réception (G2) du deuxième temps de propagation déterminé par le deuxième équipement et,
- une étape de détermination (G3) de l'asymétrie à partir des premier et deuxième temps de propagation.

8. Premier équipement (N2) d'un réseau de transmission optique, un signal optique étant transmis d'un deuxième équipement (N1) vers ledit premier équipement au moyen d'une première fibre optique (FO1) et dudit premier équipement vers ledit deuxième équipement au moyen d'une deuxième fibre optique (FO2), distincte de la première fibre optique, ledit premier équipement comprenant :

- des moyens dits de bouclage (14, 34, 44, 54), agencés pour, dans un premier mode, diriger un signal optique reçu sur la première fibre optique vers des moyens de réception du premier équipement et, dans un deuxième mode, injecter dans la première fibre optique un signal émis en retour à un signal de mesure émis par ledit deuxième équipement ;
- des moyens de détection (15) d'un déclenchement d'une mesure du temps de propagation d'un signal de mesure, le signal de mesure étant émis par ledit deuxième équipement au moyen de la première fibre ;
- des moyens de commande (17), agencés pour configurer les moyens de bouclage vers le deuxième mode suite à ladite détection.

9. Premier équipement selon la revendication 8, comprenant en outre :

- les moyens de réception (15) du signal de mesure ;
- des moyens de traitement (17), agencés pour traiter le signal de mesure pour obtenir le signal en retour et pour déterminer un temps de traitement par le premier équipement ;
- des moyens de transmission (16) du temps de traitement.

10. Système de mesure d'un temps de propagation d'un signal optique dans un réseau de transmission optique comprenant un premier équipement (N2) selon la revendication 8 et un deuxième équipement (N1) du réseau de transmission optique, connecté au premier équipement (N2) et comprenant :

- des moyens de déclenchement (10, 20) d'une mesure du temps de propagation d'un signal de mesure, le signal de mesure étant émis par ledit deuxième équipement au moyen de la première fibre vers ledit premier équipement ;
- des moyens de réception (11, 20) d'un signal en retour émis par ledit premier équipement ;
- des moyens de détermination (12) dudit temps de propagation à partir d'un instant d'émission du signal de mesure et d'un instant de réception du signal en retour.

11. Système de mesure d'un temps de propagation selon la revendication 10 dans lequel le deuxième équipement (N1) comprend en outre des moyens de commutation (22) du signal en retour reçu sur la première fibre vers les moyens de réception de signal optique sur la deuxième fibre, lesdits moyens de réception sur la deuxième fibre formant ainsi les moyens de réception du signal en retour.

12. Système de mesure d'un temps de propagation d'un signal optique dans un réseau de transmission optique comprenant un premier équipement (N2) selon la revendication 9 et un deuxième équipement (N1) du réseau de transmission optique, connecté au premier équipement (N2) et comprenant :

    - des moyens de déclenchement (10, 20) d'une mesure du temps de propagation d'un signal de mesure, le signal de mesure étant émis par ledit deuxième équipement au moyen de la première fibre vers ledit premier équipement ;
    - des moyens de réception (11, 20) d'un signal en retour émis par ledit premier équipement, ledit signal en retour comprenant un temps de traitement déterminé par ledit deuxième équipement ;
    - des moyens de détermination (12) dudit temps de propagation à partir d'un instant d'émission du signal de mesure, d'un instant de réception du signal en retour et du temps de traitement reçu ;
    - des moyens de commutation (42, 52) entre une première position, dans laquelle un signal optique est transmis dudit deuxième équipement vers ledit premier équipement au moyen d'une première fibre optique (FO1) et dudit premier équipement vers deuxième équipement au moyen d'une deuxième fibre optique (FO2), distincte de la première fibre optique, et une deuxième position, dans laquelle un signal optique est transmis dudit deuxième équipement vers ledit premier équipement au moyen de la deuxième fibre optique (FO2) et dudit premier équipement vers ledit deuxième équipement au moyen de la première fibre optique (FO1) ; et
    - des moyens de commande agencés pour commander la commutation des moyens de commutation vers la deuxième position.

13. Programme d'ordinateur comportant des instructions pour la mise en oeuvre du procédé de mesure d'un temps de propagation selon la revendication 1, mises en oeuvre par un équipement d'un réseau de transmission optique, lorsque ce programme est exécuté par un processeur.

14. Programme d'ordinateur comportant des instructions pour la mise en oeuvre du procédé de détermination d'un temps de propagation selon la revendication 5, mises en oeuvre par un équipement d'un réseau de transmission optique, lorsque ce programme est exécuté par un processeur.

**Patentansprüche**

1. Verfahren zur Messung einer Ausbreitungszeit eines optischen Signals zwischen zwei Vorrichtungen (N1, N2) in einem optischen Übertragungsnetz, wobei das optische Signal von der ersten Vorrichtung zur zweiten Vorrichtung mittels einer ersten optischen Faser (FO1) und von der zweiten Vorrichtung zur ersten Vorrichtung mittels einer zweiten optischen Faser (FO2) übertragen wird, die von der ersten optischen Faser verschieden ist, wobei die zweite Vorrichtung als Rückführung (14, 34, 44, 54) bezeichnete Mittel umfasst, die geeignet sind, in einem ersten Modus ein auf der ersten optischen Faser empfangenes optisches Signal zu den Empfangsmitteln der zweiten Vorrichtung zu leiten, wobei das Messverfahren die folgenden Schritte umfasst, die von der zweiten Vorrichtung durchgeführt werden:

    - einen Schritt der Detektion (F11, F21, F22), während welchem eine Auslösung einer Messung der Ausbreitungszeit eines Messsignals detektiert wird, wobei das Messsignal von der ersten Vorrichtung mittels der ersten optischen Faser emittiert wird;
    - einen Schritt der Auslegung (F12, F23) der Rückführmittel in einen zweiten Modus, wobei der zweite Modus das Einkoppeln eines Rückmeldungssignals auf das von der ersten Vorrichtung emittierte Messsignal in die erste optische Faser gestattet.

2. Messverfahren nach Anspruch 1, wobei der Detektionsschritt aus einem Schritt des Empfangs einer Anforderung zur Messung der Ausbreitungszeit besteht, wobei die Anforderung von der ersten Vorrichtung übertragen wird.

3. Messverfahren nach Anspruch 1, umfassend einen Schritt der Bestimmung (F24) einer Verarbeitungszeit in der zweiten Vorrichtung, wobei die Verarbeitungszeit zurück zur ersten Vorrichtung übertragen wird.

4. Messverfahren nach Anspruch 3, wobei der Schritt der Detektion aus einem Schritt des Empfangs des Messsignals von der ersten Vorrichtung besteht.

5. Verfahren zur Bestimmung einer Ausbreitungszeit eines optischen Signals zwischen zwei Vorrichtungen (N1, N2) in einem optischen Übertragungsnetz, wobei das optische Signal von der ersten Vorrichtung zur zweiten Vorrichtung mittels einer ersten optischen Faser (FO1) und von der zweiten Vorrichtung zur ersten Vorrichtung mittels einer zweiten optischen Faser (FO2) übertragen wird, die von der ersten optischen Faser verschieden ist, wobei die zweite Vorrichtung das Messverfahren nach Anspruch 1 durchführt, wobei das Bestimmungsverfahren die folgenden Schritte umfasst, die von der ersten Vorrichtung durchgeführt werden:

- einen Schritt der Auslösung (E11, E21, E14, E23) einer Messung der Ausbreitungszeit eines Messsignals mittels der ersten Faser, wobei das Messignal mittels der ersten optischen Faser zur zweiten Vorrichtung emittiert wird;
- einen Schritt des Empfangs (E15, E25) eines Rückmeldungssignals, das von der zweiten Vorrichtung emittiert wird, auf der ersten optischen Faser;
- einen Schritt der Bestimmung (E16, E26) der Ausbreitungszeit aus einem Moment der Emission des Messsignals und einem Moment des Empfangs des Rückmeldungssignals.

6. Bestimmungsverfahren nach Anspruch 5, ferner umfassend einen Schritt des Empfangs der Verarbeitungszeit in der zweiten Vorrichtung, wobei die zweite Vorrichtung das Messverfahren nach Anspruch 3 durchführt, und wobei der Schritt der Bestimmung der Ausbreitungszeit auch die Verarbeitungszeit miteinbezieht.

7. Verfahren zur Bestimmung einer Asymmetrie zwischen zwei optischen Fasern, die zwei Vorrichtungen (N1, N2) in einem optischen Übertragungsnetz verbinden, wobei ein optisches Signal von der ersten Vorrichtung zur zweiten Vorrichtung mittels einer ersten optischen Faser (FO1) und von der zweiten Vorrichtung zur ersten Vorrichtung mittels einer zweiten optischen Faser (FO2) übertragen wird, die von der ersten optischen Faser verschieden ist, wobei:

- die erste bzw. die zweite Vorrichtung ein Verfahren zur Bestimmung einer ersten bzw. einer zweiten Ausbreitungszeit eines optischen Signals mittels der ersten bzw. der zweiten optischen Faser nach Anspruch 5 oder 6 im Zusammenwirken mit der zweiten bzw. der ersten Vorrichtung durchführt, die das Messverfahren nach Anspruch 1 oder 3 durchführt;

wobei das Verfahren die folgenden Schritt umfasst, die von der ersten Vorrichtung durchgeführt werden:

- einen Schritt des Empfangs (G2) der zweiten Ausbreitungszeit, die von der zweiten Vorrichtung bestimmt wird, und
- einen Schritt der Bestimmung (G3) der Asymmetrie aus der ersten und zweiten Ausbreitungszeit.

8. Erste Vorrichtung (N2) eines optischen Übertragungsnetzes, wobei ein optisches Signal von einer zweiten Vorrichtung (N1) zur ersten Vorrichtung mittels einer ersten optischen Faser (FO1) und von der ersten Vorrichtung zur zweiten Vorrichtung mittels einer zweiten optischen Faser (FO2) übertragen wird, die von der ersten optischen Faser verschieden ist, wobei die erste Vorrichtung umfasst:

- als Rückführung (14, 34, 44, 54) bezeichnete Mittel, die eingerichtet sind, in einem ersten Modus ein auf der ersten optischen Faser empfangenes optisches Signal zu den Empfangsmitteln der ersten Vorrichtung zu leiten, und in einem zweiten Modus in die erste optische Faser ein Signal einzukoppeln, das als Rückmeldung auf ein von der zweiten Vorrichtung emittiertes Messignal emittiert wird;
- Mittel zur Detektion (15) einer Auslösung einer Messung der Ausbreitungszeit eines Messsignals, wobei das Messsignal von der zweiten Vorrichtung mittels der ersten Faser emittiert wird;
- Mittel zur Steuerung (17), die eingerichtet sind, die Rückführmittel in den zweiten Modus nach der Detektion auszulegen.

9. Erste Vorrichtung nach Anspruch 8, ferner umfassend:

- Mittel zum Empfang (15) des Messsignals;
- Mittel zur Verarbeitung (17), die eingerichtet sind, das Messsignal zu verarbeiten, um das Rückmeldungssignal zu erhalten und um eine Verarbeitungszeit durch die erste Vorrichtung zu bestimmen;
- Mittel zur Übertragung (16) der Verarbeitungszeit.

10. System zur Messung einer Ausbreitungszeit eines optischen Signals in einem optischen Übertragungsnetz, umfassend eine erste Vorrichtung (N2) nach Anspruch 8 und eine zweite Vorrichtung (N1) des optischen Übertragungsnetzes, die mit der ersten Vorrichtung (N2) verbunden ist, und umfassend:

- Mittel zur Auslösung (10, 20) einer Messung der Ausbreitungszeit eines Messsignals, wobei das Messsignal von der zweiten Vorrichtung mittels der ersten Faser zur ersten Vorrichtung emittiert wird;
- Mittel zum Empfang (11, 20) eines Rückmeldungssignals, das von der ersten Vorrichtung emittiert wird;
- Mittel zur Bestimmung (12) der Ausbreitungszeit aus einem Moment der Emission des Messsignals und einem Moment des Empfangs des Rückmeldungssignals.

11. System zur Messung einer Ausbreitungszeit nach Anspruch 10, wobei die zweite Vorrichtung (N1) ferner Mittel zur Umschaltung (22) des auf der ersten Faser empfangenen Rückmeldungssignals zu den Mitteln zum Empfang des optischen Signals auf der zweiten Faser umfasst, wobei die Empfangsmittel auf der zweiten Faser so die Mittel zum Empfang des Rückmeldungssignals bilden.

12. System zur Messung einer Ausbreitungszeit eines optischen Signals in einem optischen Übertragungsnetz, umfassend eine erste Vorrichtung (N2) nach Anspruch 9 und eine zweite Vorrichtung (N1) des optischen Übertragungsnetzes, die mit der ersten Vorrichtung (N2) verbunden ist, und umfassend:

    - Mittel zur Auslösung (10, 20) einer Messung der Ausbreitungszeit eines Messsignals, wobei das Messsignal von der zweiten Vorrichtung mittels der ersten Faser zur ersten Vorrichtung emittiert wird;
    - Mittel zum Empfang (11, 20) eines Rückmeldungssignals, das von der ersten Vorrichtung emittiert wird, wobei das Rückmeldungssignal eine von der zweiten Vorrichtung bestimmte Verarbeitungszeit umfasst;
    - Mittel zur Bestimmung (12) der Ausbreitungszeit aus einem Moment der Emission des Messsignals, einem Moment des Empfangs des Rückmeldungssignals und aus der empfangenen Verarbeitungszeit;
    - Mittel zur Umschaltung (42, 52) zwischen einer ersten Position, in der ein optisches Signal von der zweiten Vorrichtung zur ersten Vorrichtung mittels einer ersten optischen Faser (FO1) und von der ersten Vorrichtung zur zweiten Vorrichtung mittels einer zweiten optischen Faser (FO2) übertragen wird, die von der ersten optischen Faser verschieden ist, und einer zweiten Position, in der ein optisches Signal von der zweiten Vorrichtung zur ersten Vorrichtung mittels der zweiten optischen Faser (FO2) und von der ersten Vorrichtung zur zweiten Vorrichtung mittels der ersten optischen Faser (FO1) übertragen wird; und
    - Mittel zur Steuerung, die eingerichtet sind, die Umschaltung der Mittel zur Umschaltung in die zweite Position zu steuern.

13. Computerprogramm, umfassend Instruktionen zur Durchführung des Verfahrens zur Messung einer Ausbreitungszeit nach Anspruch 1, die von einer Vorrichtung eines optischen Übertragungsnetzes durchgeführt werden, wenn dieses Programm von einem Prozessor ausgeführt wird.

14. Computerprogramm, umfassend Instruktionen zur Durchführung des Verfahrens zur Bestimmung einer Ausbreitungszeit nach Anspruch 5, die von einer Vorrichtung eines optischen Übertragungsnetzes durchgeführt werden, wenn dieses Programm von einem Prozessor ausgeführt wird.

**Claims**

1. Method for measuring a propagation delay of an optical signal between two devices (N1, N2) in an optical transmission network, the optical signal being transmitted from the first device to the second device via a first optical fiber (FO1) and from the second device to the first device via a second optical fiber (FO2), separate from the first optical fiber, the second device including 'loopback' means (14, 34, 44, 54), capable in a first mode of directing an optical signal received on the first optical fiber to receiving means of the second device, said measurement method including the following steps implemented by the second device:

    - a detection step (F11, F21, F22), during which a triggering of a measurement of the propagation delay of a measurement signal is detected, the measurement signal being transmitted by the first device via the first optical fiber;
    - a step for configuring (F12, F23) the loopback means to a second mode, said second mode enabling a return signal to the measurement signal transmitted by the first device to be injected into the first optical fiber.

2. Measurement method according to Claim 1, in which the detection step consists of a step of receiving a request for measuring the propagation delay, said request being transmitted by the first device.

3. Measurement method according to Claim 1, including a step of determining (F24) a processing delay at the second device, the processing delay being transmitted in return to the first device.

4. Measurement method according to Claim 3, in which the detection step consists of a step of receiving the measurement signal originating from the first device.

5. Method for determining a propagation delay of an optical signal between two devices (N1, N2) in an optical transmission network, the optical signal being transmitted from the first device to the second device via a first optical fiber (FO1) and from the second device to the first device via a second optical fiber (FO2), separate from the first optical fiber, the second device implementing the measurement method according to Claim 1, said determination method including the following steps implemented by the first device:

- a step of triggering (E11, E21, E14, E23) a measurement of the propagation delay of a measurement signal via the first fiber, the measurement signal being transmitted to the second device via the first optical fiber;
- a step of receiving (E15, E25) a return signal transmitted by the second device on the first optical fiber;
- a step of determining (E16, E26) said propagation delay from an instant of the measurement signal being transmitted and an instant of the return signal being received.

6. Determination method according to Claim 5, further including a step of receiving the processing delay at the second device, the second device implementing the measurement method according to Claim 3, and in which the step of determining the propagation delay also takes into account said processing delay.

7. Method of determining an asymmetry between two optical fibers connecting two devices (N1, N2) in an optical transmission network, an optical signal being transmitted from the first device to the second device via a first optical fiber (FO1) and from the second device to the first device via a second optical fiber (F02), separate from the first optical fiber, in which: the first, respectively the second, device implements a method for determining a first, respectively a second, propagation delay of an optical signal via the first, respectively the second, optical fiber according to Claim 5 or 6 by cooperating with the second, respectively the first, device implementing the measurement method according to Claim 1 or 3; said method including the following steps implemented by the first device:

- a step of receiving (G2) the second propagation delay determined by the second device and,
- a step of determining (G3) asymmetry from the first and second propagation delays.

8. First device (N2) of an optical transmission network, an optical signal being transmitted from a second device (N1) to said first device via a first optical fiber (FO1) and from said first device to said second device via a second optical fiber (FO2), separate from the first optical fiber, said first device including:

- 'loopback' means (14, 34, 44, 54), arranged for, in a first mode, directing an optical signal received on the first optical fiber to receiving means of the first device and, in a second mode, injecting into the first optical fiber a signal transmitted in return to a measurement signal transmitted by said second device;
- means for detecting (15) a triggering of a measurement of the propagation delay of a measurement signal, the measurement signal being transmitted by said second device via the first fiber;
- control means (17), arranged for configuring the loopback means to the second mode following said detection.

9. First device according to Claim 8, further including:

- the means for receiving (15) the measurement signal;
- processing means (17), arranged for processing the measurement signal for obtaining the return signal and for determining a processing delay by the first device;
- means for transmitting (16) the processing delay.

10. System for measuring a propagation delay of an optical signal in an optical transmission network including a first device (N2) according to Claim 8 and a second device (N1) of the optical transmission network, connected to the first device (N2) and including:

- means for triggering (10, 20) a measurement of the propagation delay of a measurement signal, the measurement signal being transmitted by said second device via the first fiber to said first device;
- means for receiving (11, 20) a return signal transmitted by said first device;
- means for determining (12) said propagation delay from an instant of the measurement signal being transmitted and an instant of the return signal being received.

11. System for measuring a propagation delay according to Claim 10 in which the second device (N1) further includes means for switching (22) the return signal received on the first fiber to the optical signal receiving means on the second fiber, said receiving means on the second fiber thereby forming the means for receiving the return signal.

12. System for measuring a propagation delay of an optical signal in an optical network including a first device (N2) according to Claim 9 and a second device (N1) of the optical transmission network, connected to the first device (N2) and including:

- means for triggering (10, 20) a measurement of the propagation delay of a measurement signal, the measurement signal being transmitted by said second device via the first fiber to said first device;
- means for receiving (11, 20) a return signal transmitted by said first device, a processing delay determined by said second device;
- means for determining (12) said propagation delay from an instant of the measurement signal being transmitted, said return signal including an instant of the return signal being received, and the processing delay received
- means for switching (42, 52) between a first position, in which an optical signal is transmitted from said second device to said first device via a first optical fiber (FO1) and from said first device to second device via a second optical fiber (FO2), separate from the first optical fiber, and a second position, in which an optical signal is transmitted from said second device to said first device via the second optical fiber (FO2) and from said first device to said second device via the first optical fiber (FO1); and
- control means arranged for controlling the switching of the switching means to the second position.

13. Computer program comprising instructions for implementing the method for measuring a propagation delay according to Claim 1, implemented by an optical transmission network device, when this program is executed by a processor.

14. Computer program comprising instructions for implementing the method for measuring a propagation delay according to Claim 5, implemented by an optical transmission network device, when this program is executed by a processor.

Fig. 1a

Fig. 1b

Fig. 2

Fig. 3a

Fig. 3b

Fig. 4

| N1 | | N2 |
|---|---|---|

S_Req — E21

M1 →

Ack_Req — F21

← M2

R_Ack — E22

S_Sig — E23

Sig_M →

Conf — E24

R_Sig — F22

Conf — F23

Proc — F24

S_Sig_B — F25

← Sig_B

R_Back — E25

Conf_B — F26

Det_FO1 — E26

Conf_B — E27

Fig. 5

S

TFO1 — G1

Obt TFO2 — G2

Fig. 6

Asym(1,2) — G3

E

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 20090060498 A

**Littérature non-brevet citée dans la description**

• **GOVIND P. ; AGRAWAL.** Nonlinear Fiber Optics. *Academic Press,* 1989